# EUROPÄISCHE PATENTANMELDUNG

(11) **EP 2 842 513 A1**
(43) Veröffentlichungstag der Anmeldung: **04.03.2015**
(21) Anmeldenummer: 13182055.7
(22) Anmeldetag: 28.08.2013
(51) Int. Cl.: A61C 1/08

(54) **Beleuchtungsvorrichtung für ein medizinisches, insbesondere dentales, Instrument**

(71) Anmelder: W & H Dentalwerk Bürmoos GmbH, 5111 Bürmoos (AT)
(72) Erfinder: Irran, Thomas, 5020 Salzburg (AT); Ploy, Gernot, 5111 Bürmoos (AT); Schalda, Anton, 5121 Ostermeithing (AT)
(74) Vertreter: Benda, Ralf

(57) **Zusammenfassung**

Beleuchtungsvorrichtung (20) für ein medizinisches, insbesondere dentales, Instrument (10), umfassend: Eine metallische Hülse (21) mit zumindest einer Durchbohrung (22), zumindest ein transparentes Fenster (23) und zumindest ein Trägerelement (24), auf dem ein optisches Halbleiterelement (25) angeordnet ist, welches ausgebildet ist, elektromagnetische Strahlung zu emittieren, wobei das transparente Fenster (23) und das Trägerelement (24) die Durchbohrung (22) der metallischen Hülse (21) derart verschließen, dass zumindest eine Kammer (26) gebildet ist, in welcher das optische Halbleiterelement (25) aufgenommen ist, wobei das Trägerelement (24) keramisches Material oder glaskeramisches Material oder Glas aufweist, wobei das Trägerelement (24) eine Vorderseite (24A), eine Rückseite (24B) und zwei Seitenabschnitte (24C, 24D) aufweist und wobei zur Bildung der Kammer (26) zumindest ein Seitenabschnitt (24C, 24D) des Trägerelements (24) mit der metallischen Hülse (21) verbunden ist. Es wird des Weiteren ein Verfahren zur Herstellung einer derartigen Beleuchtungsvorrichtung (20) beschrieben.

## Beschreibung

Die vorliegende Erfindung betrifft eine Beleuchtungsvorrichtung für ein medizinisches, insbesondere dentales, Instrument, und ein Verfahren zur Herstellung einer derartigen Beleuchtungsvorrichtung.

Beleuchtungsvorrichtungen für ein medizinische, insbesondere dentale, Instrumente sind aus der Patentanmeldung WO 2013/011075 A2 bekannt. Diese Beleuchtungsvorrichtungen umfassen eine metallische Hülse, zumindest ein transparentes Fenster zur Abgabe elektromagnetischer Strahlung und zumindest ein Trägerelement, auf dem zumindest ein optisches Halbleiterelement angeordnet ist, welches ausgebildet ist, elektromagnetische Strahlung zu emittieren. Das Trägerelement ist aus keramischem Material oder glaskeramischem Material oder Glas gebildet und weist eine Vorderseite auf, auf der das optische Halbleiterelement angeordnet ist. Die Verbindung zwischen dem Trägerelement und der metallischen Hülse erfolgt mittels Metall oder Metall und Glas aufweisenden Materialien derart, dass die Vorderseite des Trägerelements mit der metallische Hülse verbunden ist.

Als Verbindung zwischen dem Trägerelement und der metallischen Hülse wird im gesamten Dokument eine dichte oder kapselnde Verbindung verstanden, und / oder eine Verbindung, welche das Eindringen von Verschmutzungen, Partikeln, Flüssigkeiten und Dampf dauerhaft unterbindet, vorzugsweise ein stoffschlüssiges Fügen oder Verbinden des Trägerelements und der metallischen Hülse, zum Beispiel durch Löten.

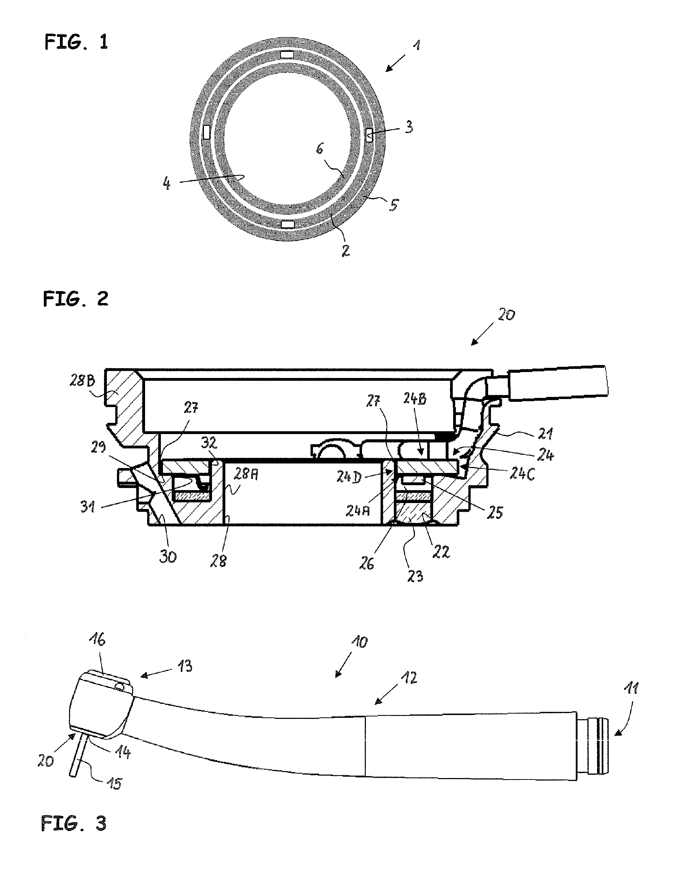

Unter Bezug auf die den Stand der Technik darstellenden Figur 1 ist zu erkennen, dass auf der Vorderseite des Trägerelements 1 somit neben der elektrischen Leitung 2 (in Form einer metallische Beschichtung) zur elektrischen Versorgung der optischen Halbleiterelemente 3 zumindest eine, im Falle einer ringförmigen Beleuchtungsvorrichtung mit einer zentralen Bohrung 4 für ein Werkzeug zwei weitere metallische oder metallhaltige Beschichtungsringe 5, 6 zur Verbindung des Trägerelements und der metallischen Hülse notwendig sind.

Bei der Herstellung derartiger Beleuchtungsvorrichtungen wurde eine unzureichende, zum Beispiel nicht ausreichend dichte, Verbindung zwischen dem Trägerelement und der metallischen Hülse festgestellt. Ursachen für diese unzureichende Verbindung sind zum Beispiel Verunreinigungen der metallischen Beschichtungsringe zur Verbindung des Trägerelements und der metallischen Hülse durch das Bestücken der elektrischen Leitung mit den optischen Halbleiterelementen oder eine nicht ausreichend plane Vorderseite des keramischen Trägerelements.

Der vorliegenden Erfindung liegt daher die Aufgabe zugrunde, eine Beleuchtungsvorrichtung für ein medizinisches, insbesondere dentales, Instrument zu schaffen, welche die oben genannten Nachteile nicht aufweist. Insbesondere soll die Beleuchtungsvorrichtung oder die Verbindung zwischen dem Trägerelement und der metallischen Hülse derart beschaffen sein, dass eine ausreichend dichte oder kapselnde Verbindung, welche das Eindringen von Verschmutzungen, Partikeln, Flüssigkeiten und Dampf dauerhaft unterbindet, gegeben ist. In entsprechender Weise ist ein Verfahren zur Herstellung einer derartigen Beleuchtungsvorrichtung zu schaffen.

Diese Aufgaben werden gemäß der vorliegenden Erfindung durch eine Beleuchtungsvorrichtung und ein Verfahren zu dessen Herstellung mit den Merkmalen des Anspruchs 1 bzw. 13 gelöst. Besonders vorteilhafte Ausführungsformen sind in den jeweiligen Unteransprüchen angeführt.

Durch das Verbinden zumindest eines, vorzugsweise beider, Seitenabschnitte des Trägerelements mit der metallischen Hülse können die zur Verbindung des Trägerelements mit der metallischen Hülse benötigten, Metall aufweisenden Materialien auf den Seitenabschnitten und somit weiter entfernt von der elektrischen Leitung zur elektrischen Versorgung des zumindest einen optischen Halbleiterelements vorgesehen werden. Damit wird die Gefahr der Verschmutzung der zur Verbindung des Trägerelements mit der metallischen Hülse benötigten, Metall aufweisenden Materialien verringert. Außerdem steht damit eine nicht ausreichend plane Vorderseite des keramischen Trägerelements einer dichten Verbindung zwischen dem Trägerelement und der metallischen Hülse nicht entgegen. Vorzugsweise umfasst dieses zur Verbindung des Trägerelements mit der metallischen Hülse benötigten, Metall aufweisenden Material ein Lotmaterial, zum Beispiel ein zinnhaltiges Material.

Vorzugsweise sind zur Bildung der Kammer, in welcher das zumindest eine optische Halbleiterelement aufgenommen ist, und / oder zu ihrer dicht verschlossenen Ausbildung, ausschließlich die beiden Seitenabschnitte des Trägerelements mit der metallischen Hülse verbunden.

Gemäß einem Ausführungsbeispiel sind der zumindest eine Seitenabschnitt des Trägerelements und die metallische Hülse durch ein Metall aufweisendes Material oder durch ein Metall und Glas aufweisendes Material miteinander verbunden. Vorzugsweise sind das Trägerelement und die metallische Hülse durch eine Metalllegierung miteinander verbunden, insbesondere durch ein Metalllot miteinander verlötet. Die Metalllegierung umfasst zum Beispiel zumindest eines der folgenden Metalle: Blei, Zinn, Zink, Silber und Kupfer. Vorzugsweise sind die Metalllegierung oder das Metalllot vor dem Löten pastös oder als diskretes, festes Bauteil ausgebildet. Nach dem Aufbringen der Metalllegierung oder des Metalllots auf dem Seitenabschnitt des Trägerelements und / oder auf der metallischen Hülse wird die Metalllegierung oder das Metalllot über ihren Schmelzpunkt erwärmt, wodurch nach der Abkühlung eine dichte und / oder haftende und / oder feste Verbindung zwischen der metallischen Hülse und dem Seitenabschnitt des Trägerelements gebildet ist / wird.

Gemäß einem Ausführungsbeispiel umfasst die metallische Hülse eine zentrale Bohrung mit einer Umfangswand zur Durchführung eines mit dem medizinischen, insbesondere dentalen, Instrument verbindbaren Werkzeugs, wobei die Umfangswand die zumindest eine Kammer, in welcher das zumindest eine optische Halbleiterelement aufgenommen ist, von der zentralen Bohrung trennt. Vorzugsweise ist (zur Bildung der Kammer) ein Seitenabschnitt des Trägerelements mit der Umfangswand verbunden ist. Vorzugsweise ist (zur Bildung der Kammer) ein Seitenabschnitt des Trägerelements mit einer Außenwand, welche insbesondere die Beleuchtungsvorrichtung oder metallische Hülse zur Umgebung abgrenzt, verbunden. Durch diese Maßnahmen wird ein besonders kompakter Aufbau der Beleuchtungsvorrichtung erzielt.

Gemäß einem Ausführungsbeispiel ist an dem zumindest eine Seitenabschnitt des, insbesondere keramischen oder glaskeramischen, Trägerelements eine Metallschicht vorgesehen, insbesondere eine Nickel und / oder Gold aufweisende Metallschicht, welche ausgebildet ist, das Verbinden oder Verlöten des zumindest eine Seitenabschnitts des Trägerelements und der metallischen Hülse zu unterstützen. Die Metallschicht ist insbesondere als Haftvermittler für ein weiteres Material, insbesondere für eine Metalllegierung oder eine Metalllot, ausgebildet.

Vorzugsweise ist der Außendurchmesser eines Ausführungsbeispiels einer Beleuchtungsvorrichtung kleiner 5 mm, insbesondere kleiner 3 mm. Vorzugsweise ist der Außendurchmesser eines Ausführungsbeispiels einer Beleuchtungsvorrichtung, die eine zentrale Bohrung zur Durchführung eines mit dem medizinischen, insbesondere dentalen, Instrument verbindbaren Werkzeugs aufweist, kleiner 1,3 cm, insbesondere kleiner 1,0 cm.

Ein Verfahren zur Herstellung einer Beleuchtungsvorrichtung ist dadurch definiert, dass zur Bildung der Kammer, in welcher das zumindest eine optische Halbleiterelement aufgenommen ist, zumindest einer, vorzugsweise beide, Seitenabschnitte des Trägerelements mit der metallischen Hülse verbunden werden. Wahlweise wird zuerst das Trägerelement in die metallische Hülse eingebracht und anschließend ein festes, vorgeformtes Material zur Verbindung des Trägerelements mit der metallischen Hülse zwischen die metallische Hülse und zumindest einen Seitenabschnitt des Trägerelements eingefügt oder es wird zuerst ein pastöses Material zur Verbindung des Trägerelements mit der metallischen Hülse auf zumindest das Trägerelement oder die metallische Hülse aufgetragen und anschließend das Trägerelement in die metallische Hülse eingebracht. Vorzugsweise wird vor dem Verbinden des Trägerelements mit der metallischen Hülse durch das Verbindungsmaterial, insbesondere vor dem Verlöten, ein Abschnitt der Vorderseite oder der Rückseite des Trägerelements an der Schulter der metallischen Hülse gelagert.

Die Erfindung wird nachfolgend anhand eines bevorzugten Ausführungsbeispiels und Bezug nehmend auf die beigefügten Zeichnungen erläutert. Es zeigt die
Figur 1 ein Trägerelement mit vier optischen Halbleiterelementen einer aus dem Stand der Technik bekannten Beleuchtungsvorrichtung.
Figur 2 ein Ausführungsbeispiel einer Beleuchtungsvorrichtung, deren Seitenabschnitte des Trägerelements für zumindest ein optisches Halbleiterelement mit der metallischen Hülse verbunden sind.
Figur 3 ein Ausführungsbeispiel eines medizinischen, insbesondere dentalen, Instruments mit einer Beleuchtungsvorrichtung der Figur 2.

Das in der Figur 3 dargestellte medizinische, insbesondere dentale, Instrument 10 ist als längliches, rohrförmiges Instrument 10 oder Handstück ausgebildet, das an einem Ende einen Anschluss 11, zum lösbaren Verbinden zum Beispiel an eine Steuervorrichtung, an ein Antriebseinheit, an eine Energiequelle und / oder an eine Fluidquelle, insbesondere eine Wasser- und / oder Druckluftquelle, aufweist. Das Instrument 10 umfasst einen gebogenen oder einen zwei gewinkelt zueinander angeordnete Abschnitte aufweisenden Griffteil 12 und einen daran anschließenden Instrumentenkopf 13. Am Instrumentenkopf 13 ist eine Werkzeugöffnung 14 vorgesehen, durch die ein Werkzeug 15 zum Einwirken auf eine Behandlungsstelle lösbar in den Instrumentenkopf 13 einbringbar ist. Im Instrumentenkopf 13 ist eine lösbare Werkzeughaltevorrichtung, zum Beispiel eine Spannzange, angeordnet, welche das Werkzeug 15 lösbar am Instrumentenkopf 13 befestigt. Die Werkzeugöffnung 14 ist seitlich am Instrumentenkopf 13 angeordnet, so dass das Werkzeug 15 gewinkelt zum Griffteil 12 oder dessen Längsachse aus dem Instrumentenkopf 13 ragt. An dem der Werkzeugöffnung 14 gegenüberliegenden Ende des Instrumentenkopfs 13 ist ein Drucktaster 16 vorgesehen, der mit einer im Instrumentenkopf 13 angeordneten Werkzeuglösevorrichtung zusammenwirkt, um das Werkzeug 15 aus dem Instrumentenkopf 13 oder der Werkzeughaltevorrichtung frei zu geben. Selbstverständlich kann das Instrument 10 auch andere bekannte Formen aufweisen, zum Beispiel pistolenförmig oder gerade ausgebildet sein.

Von der Anschlussvorrichtung 11 erstrecken sich zum Beispiel eine Vorrichtung zur Übertragung von Antriebsenergie auf die Werkzeughaltevorrichtung, insbesondere eine Welle oder eine Fluidleitung, eine oder mehrere Fluid- oder Medienleitungen, zum Beispiel eine oder mehrere Medienleitungen für (Kühl-)Wasser oder (Kühl-)Druckluft, Lichtleiter und / oder elektrische Versorgungs- oder Steuerleitungen durch das Instrument 10. Gemäß einem Ausführungsbeispiel fördert eine Fluidleitung ein Antriebsfluid, zum Beispiel Druckluft, zu einer Antriebseinheit in Form eines in Drehung versetzbaren Drehteils, insbesondere eines Laufrads. Das Drehteil ist mit der Werkzeughaltevorrichtung verbunden, um diese und ein darin aufgenommenes Werkzeug 15 in Bewegung zu versetzen.

An dem Instrumentenkopf 13, insbesondere an dem Ende des Instrumentenkopfs 13 mit der Werkzeugöffnung 14, ist eine Beleuchtungsvorrichtung 20 vorgesehen. Die Beleuchtungsvorrichtung 20 ist insbesondere um die Werkzeugöffnung 14 angeordnet oder umgibt diese ringförmig, so dass die Beleuchtungsvorrichtung 20 als Ringlicht ausgebildet ist. Alternativ ist die Beleuchtungsvorrichtung 20 an oder in dem Griffteil 12, vorzugsweise an einem unmittelbar an den Instrumentenkopf 13 anschließenden Abschnitt des Griffteil 12 angeordnet.

Die Beleuchtungsvorrichtung 20 umfasst: Eine metallische Hülse 21 mit zumindest einer Durchbohrung 22, zumindest ein transparentes Fenster 23 zur Abgabe elektromagnetischer Strahlung, insbesondere von sichtbarem Licht, und zumindest ein Trägerelement 24, auf dem zumindest ein optisches Halbleiterelement 25 angeordnet ist, welches ausgebildet ist, elektromagnetische Strahlung, insbesondere sichtbares Licht, zu emittieren. Die metallische Hülse 21 ist bevorzugt hohl ausgebildet. Die metallische Hülse 21 ist bevorzugt aus einer Metalllegierung gebildet, zum Beispiel aus Kovar.

Bevorzugt umfasst die Beleuchtungsvorrichtung 20 oder die metallische Hülse 21 mehrere, zum Beispiel zwei bis sechs, Durchbohrungen 22, wobei jeder Durchbohrung 22 zumindest ein eigenes, separates, transparentes Fenster 23 zugeordnet ist. Die transparenten Fenster 23 sind vorzugsweise durch nicht transparente Abschnitte der Beleuchtungsvorrichtung 20, zum Beispiel durch Abschnitte der metallischen Hülse 21, voneinander getrennt.

Besonders bevorzugt ist ein einziges, zum Beispiel ringförmiges, Trägerelement 24 vorgesehen, das die mehreren Durchbohrungen 22 abdeckt.

Das zumindest eine Trägerelement 24 ist vorzugsweise plattenförmig oder ringförmig ausgebildet, wobei es in seiner ringförmigen Ausbildung eine (zentrale) Bohrung 32 aufweist, durch welche insbesondere ein mit dem medizinischen, insbesondere dentalen, Instrument 10 verbindbares Werkzeug 15 durchführbar ist. Das zumindest eine Trägerelement 24 umfasst vorzugsweise ein keramisches Material, zum Beispiel eine Aluminiumoxid-Verbindung, oder ein glaskeramisches Material oder Glas.

Das oder die transparente(n) Fenster 23 und das zumindest eine Trägerelement 24 verschließen die Durchbohrung(en) 22 der metallischen Hülse 21 derart, dass zumindest eine Kammer 26 gebildet ist, in welcher das zumindest eine optische Halbleiterelement 25 aufgenommen ist. Die Kammer 26 ist dicht verschlossen oder ausgebildet, so dass keine Partikel, Flüssigkeiten oder Dampf in die Kammer 26 eindringen können, insbesondere durch ein stoffschlüssiges Fügen oder Verbinden (zum Beispiel Löten) des Trägerelements 24 und der metallischen Hülse 21.

Das Trägerelement 24 umfasst eine Vorderseite 24A, auf der das zumindest eine optische Halbleiterelement 25 angeordnet ist, eine der Vorderseite 24A, vorzugsweise im Wesentlichen parallel, gegenüber liegende Rückseite 24B und zwei Seitenabschnitte 24C, 24D, welche die Vorderseite 24A und die Rückseite 24B verbinden. Der Seitenabschnitt 24D begrenzt insbesondere die Bohrung 32 des Trägerelements 24 oder ist als (ringförmige) Innenwand des Trägerelements 24 ausgebildet.

Zur Bildung der Kammer 26 und / oder zu ihrer im Vorstehenden beschriebenen dicht verschlossenen Ausbildung, ist / sind zumindest ein, vorzugsweise beide, Seitenabschnitte 24C, 24D des Trägerelements 24 mit der metallischen Hülse 21 verbunden. Der zumindest eine Seitenabschnitt 24C, 24D des Trägerelements 24 und die metallische Hülse 21 sind vorzugsweise durch ein Metall aufweisendes Material 27 oder durch ein Metall und Glas aufweisendes Material miteinander verbunden, insbesondere miteinander verlötet.

Vorzugsweise ist das Trägerelement 24 zwischen einer Innenwand 28A der Beleuchtungsvorrichtung 20, welche insbesondere eine zentrale Bohrung 28 zur Durchführung eines Werkzeugs 15 abgrenzt, und einer Außenwand 28B der Beleuchtungsvorrichtung 20, welche insbesondere die Beleuchtungsvorrichtung 20 oder metallische Hülse 21 zur Umgebung abgrenzt, angeordnet. Vorzugsweise ist das Trägerelement 24, insbesondere sind die beiden Seitenabschnitte 24C, 24D, mit der Innenwand 28A und der Außenwand 28B dicht und / oder stoffschlüssig verbunden, vorzugsweise durch ein Metall aufweisendes Material 27 oder durch ein Metall und Glas aufweisendes Material, insbesondere sind sie miteinander verlötet.

Vorzugsweise ist an dem zumindest eine Seitenabschnitt 24C, 24D des Trägerelements 24 eine weitere (zu dem Material 27 unterschiedliche) Metallschicht vorgesehen, insbesondere eine Nickel und / oder Gold aufweisende Metallschicht, welche ausgebildet ist, das Verbinden, insbesondere Verlöten, des zumindest eine Seitenabschnitts 24C, 24D des Trägerelements 24 und der metallischen Hülse 21 zu unterstützen.

Vorzugsweise ist auf der Vorderseite 24A des Trägerelements 24 eine elektrisch leitende Schicht 31 zur elektrischen Versorgung des zumindest einen optischen Halbleiterelements 25 vorgesehen. Die elektrisch leitende Schicht 31 umfasst zum Beispiel Gold. Die elektrisch leitende Schicht 31 ist insbesondere durch Bonden elektrisch mit dem zumindest eine optische Halbleiterelement 25 verbunden. Die elektrisch leitende Schicht 31 ist zum Beispiel ringförmig um eine zentrale Bohrung 28 der Beleuchtungsvorrichtung 20 oder die Bohrung 32 des Trägerelements 24 ausgebildet. Das zumindest eine optische Halbleiterelement 25 ist zum Beispiel durch ein Klebemittel, zum Beispiel durch ein Epoxidharz auf der elektrisch leitenden Schicht 31 befestigt.

Vorzugsweise weist die metallische Hülse 21, insbesondere an der Durchbohrung 22, eine Schulter 29 auf, welche ein Abschnitt der Vorderseite 24A oder der Rückseite 24B des Trägerelements 24 lagert. Die Schulter 29 ist vorzugsweise der Umfangswand 28A gegenüber liegend angeordnet. Die Schulter 29 ist vorzugsweise an der Innenseite der Außenwand 28B vorgesehen.

Vorzugsweise weist die metallische Hülse 21 eine zentrale, durch die Umfangswand 28A begrenzte Bohrung 28 zur Durchführung eines mit dem medizinischen, insbesondere dentalen, Instrument 10 verbindbaren Werkzeugs 15 auf, wobei die Umfangswand 28A die zumindest eine Kammer 26, in welcher das zumindest eine optische Halbleiterelement 25 aufgenommen ist, von der zentralen Bohrung 28 trennt. Besonders bevorzugt ist zur Bildung der Kammer 26, in welcher das zumindest eine optische Halbleiterelement 25 aufgenommen ist, ein Seitenabschnitt 24C, 24D des Trägerelements 24 mit der Umfangswand 28A verbunden, insbesondere dicht und / oder stoffschlüssig verbunden oder verlötet, vorzugsweise durch ein Metall aufweisendes Material 27 oder durch ein Metall und Glas aufweisendes Material.

Vorzugsweise ist die Beleuchtungsvorrichtung 20 ringförmig ausgebildet ist, wobei insbesondere mehrere (zum Beispiel zwei - bis sechs) voneinander getrennte Kammern 26, in welcher jeweils zumindest ein optisches Halbleiterelement 25 aufgenommen ist, um die zentrale Bohrung 28 zur Durchführung eines Werkzeugs 15 angeordnet sind. Vorzugsweise ist dies ringförmige Beleuchtungsvorrichtung 20 an oder um die Werkzeugöffnung 14 des Instruments 10 angeordnet, insbesondere derart, dass die Werkzeugöffnung 14 und die zentrale Bohrung 28 fluchtend oder entlang einer gemeinsamen Mittelachse angeordnet sind.

Vorzugsweise ist in oder an der metallischen Hülse 21 zumindest eine Fluidleitung 30 vorgesehen ist, welche ausgebildet ist, ein Fluid in Richtung einer Behandlungsstelle zu leiten. Die Fluidleitung 30 umfasst zum Beispiel eine Bohrung durch die Außenwand 28B der metallischen Hülse 21 oder einen nutförmigen Kanal in der Außenseite der Außenwand 28B. Vorzugsweise vereinigen sich zwei separate Fluidleitungen in der metallischen Hülse 21 und / oder es ist eine Mischkammer in der metallischen Hülse 21 vorgesehen, in welche mehrere Fluidleitungen münden, so dass sich insbesondere unterschiedliche Fluide in der Mischkammer vermischen können. Vorzugsweise ist eine der Fluidleitungen mit einer Flüssigkeitsquelle (z.B. Wasserquelle) und eine andere der Fluidleitungen mit einer Gasquelle (z.B. Druckluftquelle) verbunden.

Die Erfindung ist nicht auf das beschriebene Ausführungsbeispiel beschränkt, sondern umfasst alle Ausführungen, die das prinzipielle, sinngemäße Funktionsprinzip der Erfindung anwenden oder beinhalten. Des Weiteren sind alle Merkmale aller beschriebenen und dargestellten Ausführungsbeispiele miteinander kombinierbar.

## Patentansprüche

1. Beleuchtungsvorrichtung (20) für ein medizinisches, insbesondere dentales, Instrument (10), umfassend: Eine metallische Hülse (21) mit zumindest einer Durchbohrung (22), zumindest ein transparentes Fenster (23) zur Abgabe elektromagnetischer Strahlung, insbesondere von sichtbarem Licht, und zumindest ein Trägerelement (24), auf dem zumindest ein optisches Halbleiterelement (25) angeordnet ist, welches ausgebildet ist, elektromagnetische Strahlung, insbesondere sichtbares Licht, zu emittieren, wobei das transparente Fenster (23) und das Trägerelement (24) die Durchbohrung (22) der metallischen Hülse (21) derart verschließen, dass zumindest eine Kammer (26) gebildet ist, in welcher das zumindest eine optische Halbleiterelement (25) aufgenommen ist, wobei das Trägerelement (24) keramisches Material oder glaskeramisches Material oder Glas aufweist und wobei das Trägerelement (24) eine Vorderseite (24A), auf der das zumindest eine optische Halbleiterelement (25) angeordnet ist, eine der Vorderseite (24A) gegenüber liegende Rückseite (24B) und zwei Seitenabschnitte (24C, 24D), welche die Vorderseite (24A) und die Rückseite (24B) verbinden, aufweist, **dadurch gekennzeichnet, dass**
zur Bildung der Kammer (26), in welcher das zumindest eine optische Halbleiterelement (25) aufgenommen ist, zumindest ein, vorzugsweise beide, Seitenabschnitte (24C, 24D) des Trägerelements (24) mit der metallischen Hülse (21) verbunden ist / sind.

2. Beleuchtungsvorrichtung (20) nach Anspruch 1, **dadurch gekennzeichnet, dass** der zumindest eine Seitenabschnitt (24C, 24D) des Trägerelements (24) und die metallische Hülse (21) durch ein Metall aufweisendes Material (27) oder durch ein Metall und Glas aufweisendes Material miteinander verbunden sind.

3. Beleuchtungsvorrichtung (20) nach Anspruch 1 oder 2, **dadurch gekennzeichnet, dass**
der zumindest eine Seitenabschnitt (24C, 24D) des Trägerelements (24) und die metallische Hülse (21) miteinander verlötet sind.

4. Beleuchtungsvorrichtung (20) nach Anspruch 3, **dadurch gekennzeichnet, dass** an dem zumindest eine Seitenabschnitt (24C, 24D) des Trägerelements (24) eine Metallschicht vorgesehen ist, insbesondere eine Nickel und / oder Gold aufweisende Metallschicht, welche ausgebildet ist, das Verlöten des zumindest eine Seitenabschnitts (24C, 24D) des Trägerelements (24) und der metallischen Hülse (21) zu unterstützen.

5. Beleuchtungsvorrichtung (20) nach einem der vorstehenden Ansprüche, **dadurch gekennzeichnet, dass**
das Trägerelement (24) plattenförmig oder ringförmig mit einer zentralen Bohrung (28) ausgebildet ist.

6. Beleuchtungsvorrichtung (20) nach einem der vorstehenden Ansprüche, **dadurch gekennzeichnet, dass**
auf der Vorderseite (24A) des Trägerelements (24) eine elektrisch leitende Schicht (31) zur elektrischen Versorgung des zumindest einen optischen Halbleiterelements (25) vorgesehen ist.

7. Beleuchtungsvorrichtung (20) nach einem der vorstehenden Ansprüche, **dadurch gekennzeichnet, dass**
die metallische Hülse (21), insbesondere an der Durchbohrung (22), eine Schulter (29) aufweist, welche ein Abschnitt der Vorderseite (24A) oder der Rückseite (24B) des Trägerelements (24) lagert.

8. Beleuchtungsvorrichtung (20) nach einem der vorstehenden Ansprüche, **dadurch gekennzeichnet, dass**
die metallische Hülse (21) eine zentrale Bohrung (28) mit einer Umfangswand (28A) zur Durchführung eines mit dem medizinischen, insbesondere dentalen, Instrument (10) verbindbaren Werkzeugs (15) aufweist, wobei die Umfangswand (28A) die zumindest eine Kammer (26), in welcher das zumindest eine optische Halbleiterelement (25) aufgenommen ist, von der zentralen Bohrung (28) trennt.

9. Beleuchtungsvorrichtung (20) nach Anspruch 8, **dadurch gekennzeichnet, dass** zur Bildung der Kammer (26), in welcher das zumindest eine optische Halbleiterelement (25) aufgenommen ist, ein Seitenabschnitt (24C, 24D) des Trägerelements (24) mit der Umfangswand (28A) verbunden ist.

10. Beleuchtungsvorrichtung (20) nach einem der vorstehenden Ansprüche, **dadurch gekennzeichnet, dass**
die Beleuchtungsvorrichtung (20) ringförmig ausgebildet ist, wobei insbesondere mehrere voneinander getrennte Kammern (26), in welcher jeweils zumindest ein optisches Halbleiterelement (25) aufgenommen ist, um die zentrale Bohrung (28) zur Durchführung eines Werkzeugs (15) angeordnet sind.

11. Beleuchtungsvorrichtung (20) nach einem der vorstehenden Ansprüche, **dadurch gekennzeichnet, dass**
in oder an der metallischen Hülse (21) zumindest eine Fluidleitung (30) vorgesehen ist, welche ausgebildet ist, ein Fluid in Richtung einer Behandlungsstelle zu leiten.

12. Medizinisches, insbesondere dentales, Instrument (10), vorzugsweise medizinisches, insbesondere dentales, Hand- oder Winkelstück, besonders bevorzugt medizinischer, insbesondere dentaler, Hand- oder Winkelstückkopf mit einer Werkzeughaltevorrichtung, **gekennzeichnet durch**
eine Beleuchtungsvorrichtung (20) nach einem der vorstehenden Ansprüche.

13. Verfahren zur Herstellung einer Beleuchtungsvorrichtung (20) nach einem der vorstehenden Ansprüche, **dadurch gekennzeichnet, dass**
zur Bildung der Kammer (26), in welcher das zumindest eine optische Halbleiterelement (25) aufgenommen ist, zumindest einer, vorzugsweise beide, Seitenabschnitte (24C, 24D) des Trägerelements (24) mit der metallischen Hülse (21) verbunden werden.

14. Verfahren nach Anspruch 13, **dadurch gekennzeichnet, dass**
wahlweise zuerst das Trägerelement (24) in die metallische Hülse (21) eingebracht und anschließend ein festes, vorgeformtes Material zur Verbindung des Trägerelements (24) mit der metallischen Hülse (21) zwischen die metallische Hülse (21) und zumindest einen Seitenabschnitt (24C, 24D) des Trägerelements (24) eingefügt werden oder dass zuerst ein pastöses Material zur Verbindung des Trägerelements (24) mit der metallischen Hülse (21) auf zumindest das Trägerelement (24) oder die metallische Hülse (21) aufgetragen wird und anschließend das Trägerelement (24) in die metallische Hülse (21) eingebracht wird.

15. Verfahren nach einem der Ansprüche 13 oder 14, **dadurch gekennzeichnet, dass** vor dem Verbinden des Trägerelements (24) mit der metallischen Hülse (21) durch das Verbindungsmaterial (27), insbesondere vor dem Verlöten, ein Abschnitt der Vorderseite (24A) oder der Rückseite (24B) des Trägerelements (24) an der Schulter (29) gelagert wird.
